(19)

**Europäisches Patentamt**
**European Patent Office**
**Office européen des brevets**

(11) **EP 1 828 322 B1**

(12) **EUROPEAN PATENT SPECIFICATION**

(45) Date of publication and mention
of the grant of the patent:
**23.12.2009 Bulletin 2009/52**

(51) Int Cl.:
*C09D 7/12* *(2006.01)*     *C09D 167/04* *(2006.01)*
*C08K 3/36* *(2006.01)*     *C08K 5/3492* *(2006.01)*

(21) Application number: **05824428.6**

(86) International application number:
**PCT/US2005/038721**

(22) Date of filing: **26.10.2005**

(87) International publication number:
**WO 2006/047666 (04.05.2006 Gazette 2006/18)**

(54) **LIQUID COATING COMPOSITIONS THAT INCLUDE A COMPOUND FORMED FROM AT LEAST ONE POLYFUNCTIONAL ISOCYANURATE, RELATED MULTI-LAYER COMPOSITE COATINGS, METHODS AND COATED SUBSTRATES**

FLÜSSIGE BESCHICHTUNGSZUSAMMENSETZUNGEN MIT EINER VERBINDUNG AUS MINDESTENS EINEM POLYFUNKTIONELLEN ISOCYANURAT, ENTSPRECHENDE MEHRSCHICHTIGE VERBUNDBESCHICHTUNGEN, VERFAHREN UND BESCHICHTETE SUBSTRATE

COMPOSITIONS DE REVETEMENT LIQUIDES CONTENANT UN COMPOSE FORME A PARTIR D'AU MOINS UN ISOCYANURATE POLYFONCTIONNEL, DES REVETEMENTS COMPOSITES MULTICOUCHE ET DES PROCEDES ASSOCIES, ET DES SUBSTRATS REVETUS

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.10.2004 US 974235**

(43) Date of publication of application:
**05.09.2007 Bulletin 2007/36**

(73) Proprietor: **PPG Industries Ohio, Inc.
Cleveland, OH 44111 (US)**

(72) Inventors:
• **SCHNEIDER, John R.
Glenshaw, PA 15116 (US)**

• **RETSCH, William, H., Jr
Allison Park, PA 15101 (US)**
• **AMBROSE, Ronald, R.
Pittsburgh, PA 15206 (US)**

(74) Representative: **Polypatent
Braunsberger Feld 29
51429 Bergisch Gladbach (DE)**

(56) References cited:
**EP-A- 0 661 315     EP-A- 0 835 914
US-A- 4 242 253**

**Description**

**FIELD OF THE INVENTION**

The present invention is directed to liquid compositions that comprise at least one film-forming resin, at least one flatting agent, and at least one compound formed from at least one polyfunctional isocyanurate. The invention is also directed to multi-layer composite coatings comprising at least one layer deposited from a composition comprising such compositions, substrates at least partially coated with a coating deposited from a composition comprising such liquid compositions, and methods of coating substrates with such liquid compositions. The present invention is also directed to methods for enhancing the flatting capability of at least one flatting agent in a liquid coating composition.

**BACKGROUND OF THE INVENTION**

Liquid coating compositions are used in many applications. Often, it is desirable to prepare coatings from liquid compositions in cases where a low gloss surface is required. For example, flat finishes are often desired for certain vehicle bodies and parts, such as external trim parts on vehicles, such as bumpers. To obtain coatings with a low gloss property, flatting agents are often added to liquid coating compositions from which such coatings are deposited.
One problem that has been associated with the use of flatting agents in liquid coating compositions is they can significantly increase the viscosity of the composition, particularly when they are incorporated into the composition at a level necessary to achieve a low gloss coating (defined below). Indeed, in certain high solids (defined below) coating compositions, for example, a low gloss coating is achieved by adding one or more flatting agents to the composition in amounts that cause the viscosity of the composition to increase such that the composition becomes a putty. This increase in viscosity can make the composition unsprayable and otherwise difficult to apply. Moreover, such liquid compositions often exhibit poor flow properties. Coatings resulting from such liquid compositions often have an undesired "bumpy" appearance and exhibit gloss variation due to uneven settling of the flatting agent.
EP-A-835 914 discloses a low gloss coating composition having a 60° gloss of less than about 60 which contains:

 a) a glycidyl group-containing acrylic copolymer,
 b) an aromatic polyester, and
 c) an isocyanurate curing agent of a defined formula.

Accordingly, there is a need in the art for coating compositions that can be relatively high in solids content and relatively low in viscosity, and which can produce low gloss coatings having a good appearance.

**SUMMARY OF THE INVENTION**

The present invention is directed to liquid coating compositions comprising:

 (a) at least one film-forming resin,
 (b) at least one flatting agent, and
 (c) at least one compound formed from at least one polyfunctional isocyanurate,

wherein the at least one compound formed from at least one polyfunctional isocyanurate is present in the composition in an amount sufficient to result in a coating having a 60° gloss that is at least 10% lower compared to a coating deposited at similar conditions from a similar liquid coating composition that does not include the at least one compound formed from at least one polyfunctional isocyanurate,
wherein the at least one compound formed from at least one polyfunctional isocyanurate comprises the reaction product of reactants comprising: (i) at least one polyfunctional isocyanurate, and (ii) at least one long chain monofunctional reactant having a reactive group reactive with the reactive groups of the at least one polyfunctional isocyanurate, and
wherein the at least one compound formed from at least one polyfunctional isocyanurate is present in the liquid coating composition is an amount of 1 up to 50 weight percent, with weight percent being based on the total weight of resins solids in the composition.
The present invention is further directed to low gloss coatings deposited from a liquid coating composition as defined above.
The present invention also relates to methods for enhancing the flatting capability of at least one flatting agent in a liquid coating composition, the method comprising adding to the composition at least one compound formed from at least one polyfunctional isocyanurate as defined above.

**DETAILED DESCRIPTION OF THE INVENTION**

As used herein, the term "liquid coating composition" refers to compositions suitable for use in producing coatings, wherein the composition is in liquid form, such as waterborne or solventborne coating compositions, as opposed to particulate or powder coating compositions. In certain embodiments, the liquid compositions of the present invention comprise at least one diluent, such as, for example, organic solvents, water, and/or water/organic solvent mixtures. Suitable organic solvents include, for example, alcohols, ketones, aromatic hydrocarbons, glycol ethers, esters or mixtures thereof. In certain embodiments, the at least one diluent is present in the liquid coating compositions of the present invention in an amount ranging from 5 to 80 weight percent based on total weight of the composition, such as 30 to 50 percent.

In cases where the liquid coating compositions of the present invention are in the form of waterborne systems, the composition is often in the form of an aqueous dispersion. The term "dispersion" refers to a two-phase transparent, translucent, or opaque resinous system in which the resin is in the dispersed phase and the water is in the continuous phase. The average particle size of the resinous phase is generally less than 1.0 $\mu$m (micron), such as less than 0.5 $\mu$m (micron) or less than 0.1 $\mu$m (micron).

In these embodiments, the continuous phase is generally present in amounts ranging from 10 up to 50 weight percent based on total weight of the composition, such as 15 up to 30 weight percent. In these embodiments, the continuous phase may be present in the liquid coating composition in any range of values inclusive of the recited values.

As previously indicated, the liquid coating compositions of the present invention comprise at least one film-forming resin. As used herein, the term "film-forming resin" refers to resins that can form a self-supporting continuous film on at least a horizontal surface of a substrate upon removal of any diluents or carriers present in the composition or upon curing at ambient or elevated temperature.

Conventional film-forming resins that may be used in the liquid coating compositions of the present invention include, without limitation, those typically used in automotive OEM coating compositions, automotive refinish coating compositions, industrial coating compositions, architectural coating compositions, coil coating compositions, and aerospace coating compositions, among others.

In certain embodiments, the at least one film-forming resin included within the liquid coating compositions of the present invention comprises at least one thermosetting film-forming resin. As used herein, the term "thermosetting" refers to resins that "set" irreversibly upon curing or crosslinking, wherein the polymer chains of the polymeric components are joined together by covalent bonds. This property is usually associated with a crosslinking reaction of the composition constituents often induced, for example, by heat or radiation. See Hawley, Gessner G., The Condensed Chemical Dictionary, Ninth Edition., page 856; Surface Coatings, vol. 2, Oil and Colour Chemists' Association, Australia, TAFE Educational Books (1974). Curing or crosslinking reactions also may be carried out under ambient conditions. Once cured or crosslinked, a thermosetting resin will not melt upon the application of heat and is insoluble in solvents. In other embodiments, the at least one film-forming resin included within the liquid coating compositions of the present invention comprises a thermoplastic resin. As used herein, the term "thermoplastic" refers to resins that comprise polymeric components that are not joined by covalent bonds and thereby can undergo liquid flow upon heating and are soluble in solvents. See Saunders, K.J., Organic Polymer Chemistry, pp. 41-42, Chapman and Hall, London (1973).

Film-forming resins suitable for use in the liquid coating compositions of the present invention include, for example, those formed from the reaction of at least one polymer having at least one type of reactive group and at least one curing agent having reactive groups reactive with the reactive group(s) of the at least one polymer. As used herein, the term "polymer" is meant to encompass oligomers, and includes, without limitation; both homopolymers and copolymers. The polymers can be, for example, acrylic, saturated or unsaturated polyester, polyurethane or polyether, polyvinyl, cellulosic, acrylate, silicon-based polymers, co-polymers thereof, and mixtures thereof, and can contain reactive groups such as epoxy, carboxylic acid, hydroxy, isocyanate, amide, carbamate and carboxylate groups, among others.

Acrylic polymers, if used, are typically copolymers of acrylic acid or methacrylic acid or hydroxyalkyl esters of acrylic or methacrylic acid such as hydroxyethyl methacrylate or hydroxypropyl acrylate with one or more other polymerizable ethylenically unsaturated monomers such as alkyl esters of acrylic acid including methyl methacrylate and 2-ethyl hexyl acrylate, and vinyl aromatic compounds such as styrene, alpha-methyl styrene and vinyl toluene. The ratio of reactants and reaction conditions are often selected to result in an acrylic polymer with pendant hydroxyl or carboxylic acid functionality.

Besides acrylic polymers, the liquid coating compositions of the present invention can contain a polyester polymer or oligomer, including those containing free terminal hydroxyl and/or carboxyl groups. Such polymers may be prepared in a known manner by condensation of polyhydric alcohols and polycarboxylic acids. Suitable polyhydric alcohols include ethylene glycol, neopentyl glycol, trimethylol propane and pentaerythritol.

Suitable polycarboxylic acids include adipic acid, 1,4-cyclohexyl dicarboxylic acid and hexahydrophthalic acid. Besides the polycarboxylic acids mentioned above, functional equivalents of the acids such as anhydrides where they exist or lower alkyl esters of the acids such as the methyl esters may be used. Also, small amounts of monocarboxylic acids such as stearic acid may be used.

Hydroxyl-containing polyester oligomers can be prepared by reacting an anhydride of a dicarboxylic acid such as hexahydrophthalic anhydride with a diol such as neopentyl glycol in a 1:2 molar ratio.

Where it is desired to enhance air-drying, suitable drying oil fatty acids may be used and include those derived from linseed oil, soya bean oil, tall oil, dehydrated castor oil or tung oil.

Polyurethane polymers, such as those containing terminal isocyanate or hydroxyl groups may also be used. The polyurethane polyols or NCO-terminated polyurethanes which can be used include those prepared by reacting polyols including polymeric polyols with polyisocyanates. The polyurea-containing terminal isocyanate or primary or secondary amine groups which can be used include those prepared by reacting polyamines including polymeric polyamines with polyisocyanates. The hydroxyl/isocyanate or amine/isocyanate equivalent ratio is adjusted and reaction conditions selected to obtain the desired terminal group. Examples of suitable polyisocyanates include those described in United States Patent No. 4,046,729 at column 5, line 26 to column 6, line 28. Examples of suitable polyols include those described in United States Patent No. 4,046,729 at column 7, line 52 to column 10, line 35. Examples of suitable polyamines include those described in United States Patent No. 4,046,729 at column 6, line 61 to column 7, line 32 and in United States Patent No. 3,799,854 at column 3, lines 13 to 50.

A silicon-based polymer can also be used. As used herein, by "silicon-based polymers" is meant a polymer comprising one or more -SiO- units in the backbone. Such silicon-based polymers can include hybrid polymers, such as those comprising organic polymeric blocks with one or more -SiO- units in the backbone.

As indicated earlier, certain liquid coating compositions of the present invention can include at least one film-forming resin that is formed from the use of at least one curing agent. Curing agents suitable for use in the liquid coating compositions of the present invention can include, for example, aminoplast resins and phenoplast resins and mixtures thereof, as curing agents for OH, COOH, amide, and carbamate reactive group containing materials. Examples of aminoplast and phenoplast resins suitable as curing agents in the liquid coating compositions of the present invention include those described in United States Patent No. 3,919,351 at col. 5, line 22 to col. 6, line 25.

Suitable curing agents also include polyisocyanates and blocked polyisocyanates as curing agents for OH and primary and/or secondary amino group-containing materials. Examples of polyisocyanates and blocked isocyanates suitable for use as curing agents in the liquid coating compositions of the present invention include those described in United States Patent No. 4,546,045 at col. 5, lines 16 to 38; and in United States Patent No. 5,468,802 at col. 3, lines 48 to 60.

Anhydrides as curing agents for OH and primary and/or secondary amino group containing materials are well known in the art and are also suitable for use in the liquid coating compositions of the present invention. Examples of suitable anhydrides include those described in United States Patent No. 4,798,746 at col. 10, lines 16 to 50; and in United States Patent No. 4,732,790 at col. 3, lines 41 to 57.

Polyepoxides as curing agents for COOH reactive group containing materials are well known in the art and are also suitable for use in the liquid coating compositions of the present invention. Examples of suitable polyepoxides include those described in United States Patent No. 4,681,811 at col. 5, lines 33 to 58.

Polyacids as curing agents for epoxy reactive group containing materials are well known in the art and are suitable for use in the liquid coating compositions of the present invention. Examples of suitable polyacids include those described in United States Patent No. 4,681,811 at col. 6, line 45 to col. 9, line 54.

Polyols, that is, material having an average of two or more hydroxyl groups per molecule, can be used as curing agents for NCO reactive group containing materials and anhydrides and esters and are well known in the art and are also suitable for use in the liquid coating compositions of the present invention. Examples of suitable polyols include those described in United States Patent No. 4,046,729 at col. 7, line 52 to col. 8, line 9; col. 8, line 29 to col. 9, line 66; and in United States Patent No. 3,919,315 at col. 2, line 64 to col. 3, line 33.

Polyamines can also be used as curing agents for NCO reactive group containing materials and for carbonates and unhindered esters and are well known in the art and are also suitable for use in the liquid coating compositions of the present invention. Examples of suitable polyamines include those described in United States Patent No. 4,046,729 at col. 6, line 61 to col. 7, line 26, and in United States Patent No. 3,799,854 at column 3, lines 13 to 50.

When desired, appropriate mixtures of curing agents may be used. Moreover, the liquid coating compositions of the present invention can be formulated as a one-component composition where at least one curing agent such as an aminoplast resin and/or a blocked isocyanate compound such as those described above is admixed with other composition components. The one-component composition can be storage stable as formulated. Alternatively, such compositions can be formulated as a two-component composition where, for example, a polyisocyanate curing agent such as those described above can be added to a pre-formed admixture of the other composition components just prior to application. The pre-formed admixture can comprise curing agents for example, aminoplast resins and/or blocked isocyanate compounds, such as those described above.

In certain embodiments, the at least one film-forming resin is present in the liquid coating compositions of the present invention in an amount greater than 30 weight percent, such as greater than 40 weight percent and less than 90 weight percent, or, in some cases, greater than 50 weight percent and less than 90 weight percent, with weight percent being based on the total weight of the liquid coating composition. For example, the weight percent of resin can be between 30 and 90 weight percent. When at least one curing agent is used, it may, in certain embodiments, be present in an amount of up to 70 weight percent, such as between 10 and 70 weight percent; this weight percent is also based on the total weight of the liquid coating composition.

As previously indicated, the liquid coating compositions of the present invention comprise at least one flatting agent. As used herein, the term "flatting agent" refers to a material, such as a pigment, added to a coating composition to reduce the gloss of a coating film deposited from such a composition. In some cases, as will be understood by those skilled in the art, it is the addition of a flatting agent to a coating composition that results in a coating composition capable of producing a low gloss coating (defined below).

Flatting agents may comprise inorganic or organic materials, both or either of which are suitable for use in the liquid coating compositions of the present invention. Examples of inorganic flatting agents that are suitable for use in the liquid coating compositions of the present invention include amorphous or pyrogenic silica, silica gels, alumina, titania, zirconia, zircon, tin oxide, magnesia, or mixtures thereof. An inorganic flatting agent may be untreated, or surface-treated with organic compounds, e.g., with suitable wax types or with inorganic compounds. Examples of organic flatting agents that are suitable for use in the liquid coating compositions of the present invention include polypropylene, polyethylene, polytetrafluoroethylene (PTFE), and other polymers having equivalent or similar optical properties. Examples of other suitable organic flatting agents are Al, Zn, Ca or Mg stearate, waxy compounds such as, e.g., micronised polypropylene waxes, and urea-formaldehyde condensates. In certain embodiments, the liquid coating compositions of the present invention comprise at least one flatting agent comprising silica, such as a synthetic amorphous silica gel.

In certain embodiments, the at least one flatting agent is present in the liquid coating compositions of the present invention in an amount of 1 up to 50 volume percent, such as 5 up to 30 volume percent or, in some cases, 10 up to 20 volume percent, with volume percent being based on the total volume of solids in the liquid coating composition. In such embodiments, the amount of the flatting agent present in the liquid coating composition can range between any combination of the recited values, inclusive of the recited values.

The liquid coating compositions of the present invention also comprise at least one compound formed from at least one polyfunctional isocyanurate. As used herein the term "isocyanurate" refers to a compound having a cyclic structure formed by the reaction of three isocyanate groups, NCO. As used herein, the term "polyfunctional isocyanurate" refers to isocyanurates that include at least two reactive groups, in some cases three reactive groups, such as hydroxyl, epoxy, isocyanate, acid, amine, aziridine, carbamate, melamine, allyl and/or acetoacetate groups, among others. Specific non-limiting examples of suitable polyfunctional isocyanurates include tris(hydroxyethyl) isocyanurate (THEIC), triglycidyl isocyanurate (TGIC), triallyl isocyanurate (TAIC), and the isocyanurate trimer of hexamethylene diisocyanate (HDI), such as Desmodur® N-3300, which is commercially available from Bayer Polymers LLC, Pittsburgh, PA, including mixtures of the aforementioned polyfunctional isocyanurates.

In certain embodiments, the at least one compound formed from at least one polyfunctional isocyanurate is present in the liquid coating compositions of the present invention in an amount of 1 up to 50 weight percent, such as 1 up to 35 weight percent or, in some cases, 2 up to 15 weight percent, with weight percent being based on the total weight of resin solids in the composition. In such embodiments, the amount of the at least one compound formed from at least one polyfunctional isocyanurate present in the liquid coating composition can range between any combination of the recited values, inclusive of the recited values.

The particular structure and physical properties of the coating components are not critical, so long as when the at least one compound formed from at least one polyfunctional isocyanurate is included in the liquid coating composition in a sufficient amount, the composition results in a coating having a 60° gloss that is at least 10% or, in some cases, at least 50% or, in yet other cases, at least 75% lower compared to a coating deposited at similar conditions from a similar coating composition that does not include the at least one compound formed from at least one polyfunctional isocyanurate.

As used herein, the term "gloss".refers to the ability of a coating to reflect light, with a higher gloss value corresponding to a larger amount of light being reflected. As will be understood by those skilled in the art, gloss measurements can be made using a BYK/Haze Gloss meter available from Gardner Instrument Company, Inc. As used herein, the term "60° gloss" refers to the gloss of a coated substrate determined at a 60° angle using such a BYK/Haze Gloss meter.

As will be understood by those skilled in the art, the gloss of a coating can be affected by not only the coating composition itself but also the conditions under which the coating is deposited. As used herein, the term "deposited at similar conditions" means that two comparative coatings are deposited on the same or similar substrates at the same or similar film thicknesses. The skilled artisan will also appreciate that the gloss of a coating deposited from a thermosetting composition can be affected by cure conditions. As a result, at least in the case of thermosetting compositions, the term "deposited at similar conditions" also means that two comparative coatings are cured under similar cure conditions, such as cure temperature, humidity, and time. As used herein, the term "similar coating composition" means that a comparative coating composition contains the same components in the same or similar amounts as the composition to which it is being compared, except that the comparative coating composition does not include at least one compound formed from at least one polyfunctional isocyanurate.

Certain embodiments of the liquid coating compositions of the present invention are directed to a sprayable, high solids coating compositions capable of producing a low gloss coating. In these embodiments, the particular structure and physical properties of the coating components, including the at least one compound formed from at least one polyfunctional isocyanate, are not critical, so long as the resultant coating composition is sprayable, high solids, and is capable of producing a low gloss coating. As used herein, the term "high solids" refers to coating compositions that comprise at least 40 weight percent or, in some cases, at least 50 weight percent total solids (wherein "solids" refers to non-volatiles), with weight percent being based on the total weight of the composition. As used herein, the term "sprayable" refers to a composition that is capable of being applied to a substrate uniformly by atomization through a device such as a spray gun. Sprayability, as will be appreciated by those skilled in the art, is a function of the rheology profile, *i.e.*, viscosity, of the coating composition. Typically, a coating composition with a viscosity of about 2 to about 300 centipoise at 25°C (77°F) is considered to be sprayable when using, for example, a DeVilbiss® GTI-620 High Volume Low Pressure (HVLP) gravity feed spray gun with a 1.4 spray tip, 2000 hair cap. As used herein, the term "low gloss coating" refers to a coating having a 60° gloss, measured as described above, of no more than 20 gloss units. In certain embodiments, the liquid coating composition of the present invention is capable of producing a low gloss coating when applied at a film thicknesses of up to 508 $\mu$m (20 (mils).

In certain embodiments of the coating compositions of the present invention, the at least one compound formed from at least one polyfunctional isocyanurate has a Hansen hydrogen bonding solubility parameter, $\delta_H$, of no more than 6.5 (cal/cm$^3$)$^{1/2}$ or, in some cases, no more than 6.0 (cal/cm$^3$)$^{1/2}$ or, in yet other cases, the Hansen hydrogen bonding solubility parameter is no more than 4.0 (cal/cm$^3$)$^{1/2}$. In these embodiments, the particular structure and physical properties of the at least one compound formed from at least one polyfunctional isocyanate are not critical, so long as such compound(s) have an Hansen hydrogen bonding solubility parameter $\delta_H$ that ranges between any combination of the recited values, inclusive of the recited values.

As will be understood by the skilled artisan, the solubility parameter of a material is the measurement of the square root of the energy of vaporization per molar volume of that material. The unit of measure is calories per cubic centimeter ("(cal/cm$^3$)$^{1/2}$") and is sometimes called a "hildebrand." The skilled artisan will understand that the Hansen solubility parameter has three components, a dispersive component, $\delta_D$; a polar component, $\delta_P$; and a hydrogen bonding component, $\delta_H$. The square root of the sum of the squares of the three components is the overall Hansen solubility parameter, $\delta$. Thus, as will be understood by those skilled in the art, $\delta$ is calculated as follows:

$$\delta = (\delta_D{}^2 + \delta_P{}^2 + \delta_H{}^2)^{1/2}$$

If more information is desired, a description of the Hansen solubility parameters can be found on pages 889 to 909 of the ENCYCLOPEDIA OF CHEMICAL TECHNOLOGY, Supplement Volume, 2nd ed., 1971, John Wiley & Sons, Inc.

The Hansen solubility parameters reported herein can be measured by the following method. If the sample to be measured contains solvent, the solvent is removed so that the material is essentially 100% solids. The material is then placed in a series of vials each containing a different solvent and the vial is briefly shaken. Typically, 20 to 30 solvents having known Hansen solubility parameters are used. After allowing the vials to stand for 24 hours and briefly shaking them again, each specimen is characterized according to the following ratings: 1 =completely soluble (completely clear), 2=almost soluble (slightly hazy), 3=strongly swollen (hazy, no resin precipitation), 4=swollen (cloudy, resin precipitation), 5=slight effect (cloudy, severe resin precipitation) and 6=insoluble (no visible effect). A non-linear least squares procedure is then used to estimate the Hansen solubility parameters and the radius of the solubility envelope around that resin. For further explanation of Hansen solubility parameters and measurement thereof, see, e.g., Hansen Solubility Parameter: A User's Handbook, Charles M. Hansen, CRC Press LLC, Boca Raton, Fla., 2000.

The present invention is directed to liquid coating compositions comprising at least one compound formed from at least one polyfunctional isocyanurate, wherein that compound comprises the reaction product of reactants comprising: (i) at least one polyfunctional isocyanurate, and (ii) at least one long chain monofunctional reactant having a reactive group reactive with the reactive groups of the at least one polyfunctional isocyanurate. As used herein, the term "log chain" refers to a chain having at least 4 carbon atoms, such as at least 8 carbon atoms or, in some cases, at least 18 carbon atoms.

In these embodiments, the at least one long chain monofunctional reactant has a reactive group reactive with the reactive groups of the at least one polyfunctional isocyanurate. For example, in the case where the at least one polyfunctional isocyanurate comprises reactive groups reactive towards acid groups, the long chain monofunctional reactant may comprise at least one long chain monoacid. Suitable monoacids include caproic acid, butyric acid, heptanoic acid, caprylic acid, pelargonic acid, capric acid, n-undecylic acid, lauric acid, myristic acid, palmitic acid, margaric acid, stearic acid, isostearic acid, arachidic acid, behenic acid, erucic acid, lignoceric acid, cerotic acid, oleic acid, elaidic acid, montanic acid, linoleic acid, linolenic acid, lauroleic acid, dihydroxystearic acid, ricinoleic acid, eleostearic acid, and isomers and mixtures thereof.

In certain embodiments, the present invention is directed to liquid coating compositions comprising at least one compound formed from at least one polyfunctional isocyanurate, wherein that at least one compound comprises the reaction product of reactants comprising: (i) and (ii) as described above, and (iii) at least one polyfunctional reactant having at least two reactive groups reactive with the reactive groups of the at least one polyfunctional isocyanurate.

For example, in the case where the polyfunctional isocyanurate comprises at least two groups reactive towards acid groups, the compound formed from at least one polyfunctional isocyanurate may be formed from a reactant comprising a polycarboxylic acid. Such a reactant may be utilized to build the molecular weight of the compound as will be understood by the skilled artisan. As used herein, the term "polycarboxylic acids" refers to substances comprising at least two acid groups per molecule, wherein the parameter of at least two acid groups per molecule encompasses mixtures of polyacids in which di-functional acids are mixed with tri- or higher functionality polyacids. Among the polycarboxylic acids that may be used are carboxylic acid group-containing polymers such as acrylic polymers, polyesters, and polyurethanes.

Acid-functional acrylic polymers may be made by copolymerizing methacrylic acid and/or acrylic acid monomers with other ethylenically unsaturated copolymerizable monomers, using techniques known to those skilled in the art. Alternatively, acid-functional acrylics can be prepared from hydroxy-functional acrylics reacted with cyclic anhydrides using conventional techniques.

In certain embodiments, the polycarboxylic acid is a crystalline material, such as a crystalline aliphatic material containing 4 to 20 carbon atoms. Examples of suitable crystalline acids include adipic, succinic, sebacic, azelaic and dodecanedioic acid. In addition, carboxylic acid functional polyesters may be used. Low molecular weight polyesters and half-acid esters can be used which are based on the condensation of aliphatic polyols with aliphatic and/or aromatic polycarboxylic acids or anhydrides, or the reaction of aliphatic polyols and aliphatic and/or aromatic anhydrides, respectively. Examples of suitable aliphatic polyols include ethylene glycol, propylene glycol, butylene glycol, 1,6-hexanediol, trimethylol propane, di-trimethylol propane, neopentyl glycol, 1,4-cyclohexanedimethanol, pentaerythritol and the like. The polycarboxylic acids and anhydrides may include inter alia, terephthalic acid, isophthalic acid, phthalic acid, phthalic anhydride, tetrahydrophthalic acid, tetrahydrophthalic anhydride, hexahydrophthalic acid, alkylhexahydrophthalic anhydride, chlorendic anhydride and the like. Mixtures of the polycarboxylic acids, anhydrides and polyols may also be used.

In certain embodiments, particularly where the liquid coating composition comprises at least one film-forming resin that is a thermosetting resin, as described above, the present invention is directed to liquid coating compositions comprising at least one compound formed from at least one polyfunctional isocyanurate, wherein that at least one compound comprises the reaction product of reactants comprising: (i), (ii) and (iii) as described above, and (iv) at least one reactant comprising at least one reactive group reactive with the reactive groups of the at least one polyfunctional isocyanurate and at least one reactive group reactive with the reactive groups of the at least one curing agent from which the at least one film-forming resin is formed. Examples of suitable reactive groups include epoxy, carboxylic acid, hydroxyl, isocyanate, amide, carbamate and carboxylate groups, among others.

For example, in the case where the at least one film-forming resin is formed from at least one curing agent that comprises a polyisocyanate or blocked polyisocyanate, the at least one compound formed from at least one polyfunctional isocyanurate that is included within the liquid coating compositions of the present invention may be formed from a reactant comprising at least one hydroxyl reactive group, in some cases at least two hydroxyl reactive groups, that can react with the isocyanate groups of the at least one curing agent during cure. Non-limiting specific examples of materials suitable for use as such a reactant include, without limitation, (a) low molecular weight hydroxyl carboxylic acids, i.e., hydroxyl carboxylic acids having a weight average molecular weight less than 500, e.g., $C_2$-$C_{18}$ hydroxyl carboxylic acids, and (b) low molecular weight polyols, i.e., polyols having a weight average molecular weight less than 500, e.g., aliphatic diols, such as $C_2$-$C_{10}$ aliphatic diols, triols and polyhydric alcohols; (c) polyester polyols; (d) polyether polyols; (e) amide-containing polyols; (f) polyacrylic polyols; (g) polyhydric polyvinyl alcohols; (h) epoxy polyols; (i) urethane polyols; and (j) mixtures of such polyols. In certain embodiments, the organic polyols are selected from the group consisting of low molecular weight polyols, polyacrylic polyols, polyether polyols, polyester polyols and mixtures thereof. As used herein, the term "polyol" is meant to include materials having at least two hydroxyl groups.

Specific examples of suitable low molecular weight hydroxyl carboxylic acids include, without limitation, glycolic acid, lactic acid, 2-hydroxyisocutyric acid, 3-hydroxybutyric acid, 2-hydroxyisocaproic acid, 2-hydroxycaproic acid, 10-hydroxydecanoic acid, 12-hydroxydecanoic acid, 12-hydroxystearic acid, 2,2-Bis(hydroxymethyl)-propionic acid, dimethylolpropionic acid, gluconic acid, and malic acid

Specific examples of suitable low molecular weight polyols include tetramethylolmethane, i.e., pentaerythritol; trimethylolethane; trimethylolpropane; di-(trimethylolpropane); dimethylolpropionic acid; 1,2-ethanediol, i.e., ethylene glycol; 1,2-propanediol, i.e., propylene glycol; 1,3-propanediol; 2,2-dimethyl-1,3-propanediol, i.e., neopentyl glycol; 1,2,3-propanetriol, i.e., glycerin; 1,2-butanediol; 1,4-butanediol; 1,3-butanediol; 1,2,4-butanetriol; 1,2,3,4-butanetriol; 2,2,4-trimethyl-1,3-pentanediol; 1,5-pentanediol; 2,4-pentanediol; 1,6 hexanediol; 2,5-hexanediol; 1,2,6 hexanetriol; 2-methyl-1,3 pentanediol; 2,4-heptanediol; 2-ethyl-1,3-hexanediol; 1,4-cyclohexanediol; 1-(2,2-dimethyl-3-hydroxypropyl)-2,2-dimethyl-3-hydroxypropionate; hexahydric alcohol, i.e., sorbitol; diethylene glycol; dipropylene glycol; 1,4-cyclohexanedimethanol; 1,2-bis(hydroxymethyl)cyclohexane; 1,2-bis (hydroxyethyl)-cyclohexane; bishydroxypropyl hydantoins; TMP/epsilon-caprolactone triols; hydrogenated bisphenol A; tris hydroxyethyl isocyanurate; the alkoxylation product of 1 mole of 2,2-bis(4-hydroxyphenyl)propane (i.e., bisphenol-A) and 2 moles of propylene oxide; ethoxylated or propoxylated trimethylolpropane or pentaerythritol having a number average molecular weight less than 500, and mixtures of such low molecular weight polyols.

Polyester polyols are known and can have a number average molecular weight in the range of from 500 to 10,000. They are prepared by conventional techniques utilizing low molecular weight diols, triols and polyhydric alcohols known in the art, including but not limited to the previously described low molecular weight polyols (optionally in combination with monohydric alcohols) with polycarboxylic acids.

In certain embodiments of the liquid coating compositions of the present invention, the compound formed from at least one polyfunctional isocyanurate comprises a polymer having a Mw of from 500 to 10,000, such as 2,000 to 10,000, a Mn of from 500 to 5,000, such as 1,000 to 3,500, and a Mw/Mn of from 1.0 to 3.0, such as 1.5 to 3.0. As used herein, "Mw" refers to the weight average molecular weight as determined by size reduction exclusion chromatography relative to linear polystyrene standards; "Mn" is the number average molecular weight as determined by size exclusion chromatography relative to linear polystyrene standards. In such embodiments, the Mw, Mn, and Mw/Mn values can range between any combination of the recited values, inclusive of the recited values:

In certain embodiments of the liquid coating compositions of the present invention, the at least one compound formed from at least one polyfunctional isocyanurate comprises a polymer having an OH value of 85 to 460, such as 150 to 250. In such embodiments, the OH value can range between any combination of the recited values, inclusive of the recited values.

Various methods may be employed to produce compounds formed from at least one polyfunctional isocyanurate that may be included within the liquid coating compositions of the present invention. For example, and without limitation, depending on the solvent system employed (as will be understood by the skilled artisan), it may be desired to include within the liquid coating composition at least one compound formed from at least one polyfunctional isocyanurate that comprises a plurality of, such as three, epoxide groups. Such isocyanurates include, for example, (a) TGIC, (b) the reaction product of Desmodur® N-3300 and an epoxy alcohol, such as glycidol, and (c) the etherification reaction product of THEIC and epichlorohydrin. The isocyanurate comprising a plurality of epoxide groups can then be reacted with reactants (ii), (iii) and (iv), as described earlier, to provide a compound formed from at least one polyfunctional isocyanurate that is suitable for inclusion in certain embodiments of the liquid coating compositions of the present invention.

In other non-limiting examples, again depending on the solvent system employed (as will be appreciated by the skilled artisan), it may be desired to include within the liquid coating composition at least one compound formed from at least one polyfunctional isocyanurate that comprises a plurality of, such as three, hydroxyl groups. An example of such a polyfunctional isocyanurate is THEIC. In such embodiments, THEIC can be reacted with reactants (ii), (iii) and (iv), as described earlier, to provide a compound formed from at least one polyfunctional isocyanurate that is suitable for inclusion in certain embodiments of the liquid coating compositions of the present invention.

In yet other non-limiting examples, it may be desired to include within the liquid coating composition at least one compound formed from at least one polyfunctional isocyanurate that comprises a plurality of, such as three, isocyanate groups. An example of such a polyfunctional isocyanurate is Desmodur® N-3300. In these embodiments, Desmodur® N-3300 can be reacted with reactants (ii), (iii) and (iv), as described earlier, to provide a compound formed from at least one polyfunctional isocyanurate that is suitable for inclusion in certain embodiments of the liquid coating compositions of the present invention.

The liquid coating compositions may also comprise additional components in addition to those previously described. For example, in certain embodiments wherein the liquid coating compositions of the present invention comprise at least one film-forming resin comprising a thermosetting resin, the coating composition may also comprise at least one catalyst. Such catalysts may accelerate the reaction of the curing agent with reactive groups on the polymer(s). Suitable catalysts for aminoplast cure include acids, such as acid phosphates and sulfonic acid or a substituted sulfonic acid. Examples include dodecylbenzene sulfonic acid, paratoluene sulfonic acid, phenyl acid phosphate, ethylhexyl acid phosphate, and the like. Suitable catalysts for isocyanate cure include organotin compounds such as dibutyltin oxide, dioctyltin oxide, dibutyltin dilaurate, and the like. In certain embodiments, suitable catalysts include metal driers, such as octoates, decanoates, stearates, and nonadecanoates of metals, such as manganese, cerium, cobalt, copper, lead, iron, zirconium, and the like. In certain embodiments, suitable catalysts include basic materials such as secondary amine catalysts, for example, piperidine, and N-methyldodecylamine; tertiary amine catalysts, such as N,N-dimethyldodecylamine, pyridine, methyldicocoamine and N,N-dimethylaniline; ammonium compounds, including tetrabutylammonium bromide, tetrabutylammonium hydroxide, and tetrabutylammonium acetate; phosphonium compounds, including ethyltriphenylphosphonium acetate and tetrabutyl phosphonium bromide, and other ammonium and phosphonium salts. In certain embodiments of the present invention, the catalyst is present in the liquid coating composition in an amount of 0.05 to 3 percent by weight, such as 0.25 to 2 percent by weight, based on the total weight of resin solids in the liquid coating composition.

In certain embodiments, the liquid coating compositions of the present invention may contain adjunct ingredients conventionally used in coating compositions. Optional ingredients such as, for example, plasticizers, surfactants, thixotropic agents, anti-gassing agents, organic cosolvents, flow controllers, anti-oxidants, UV light absorbers and similar additives conventional in the art may be included in the composition. Any such additives known in the art can be used, absent compatibility problems. Nonlimiting examples of these materials are described in United States Patent Nos. 4,220,679; 4,403,003; 4,147,769; and 5,071,904. Often, these ingredients are present at up to 40 percent by weight based on the total weight of resin solids in the liquid coating composition.

In addition to the components described above, the liquid coating compositions of the present invention may also contain color pigments, such as those conventionally used in surface coatings and may be used as a pigmented coating. The suitability of using a particular pigment will be apparent to those skilled in the art. Suitable pigments include, for example, inorganic, organic, metallic, metallic-effect, and anti-corrosive pigments, including mixtures thereof.

Specific examples of suitable inorganic pigments include, without limitation, titanium dioxide, iron oxides, lead chromate, chromium oxide, chrome green, cadmium sulfide, lithopone pigments, and the like. Specific examples of suitable organic pigments include, without limitation, carbon black; monoazo, diazo, and benzimidazolone yellows, oranges, reds, and browns; phthalocyanine blues and greens; anthraquinone pigments ranging from yellow to blue; quinacridone yellows, reds, and violets; perylene reds and browns; indigoid reds, blues, and violets; thionidigo violets; isoindolinone yellows, oranges and reds; quinoline yellows, among others. Specific examples of suitable metallic pigments include, without limitation, aluminum zinc, lead, bronze, copper, stainless steel, and mica, nickel and tin flakes, among others. Specific examples of suitable anti-corrosive pigments include, without limitation, lead oxide, zinc chromate, zinc phosphate, micaceous iron oxide, among others.

In certain embodiments, the pigment is incorporated into the liquid coating composition in amounts of up to 80 percent by weight, based on the total weight of solids in the composition. The metallic pigment is, in certain embodiments, employed in amounts of 0.5 to 25 percent by weight based on the total weight of solids in the composition. In these embodiments, the pigment may be present in the liquid coating composition in any range of values inclusive of the recited values.

As stated above, the liquid coating compositions of the present invention may be used in a method of coating a substrate comprising applying a liquid coating composition to the substrate, coalescing the liquid coating composition over the substrate in the form of a substantially continuous film, and curing the liquid coating composition.

The liquid coating compositions of the present invention can be applied to various substrates to which they adhere including wood, metals, glass, paper, masonry surfaces, foam, and plastic, including elastomeric substrates, among others. As a result, the present invention is also directed to substrates at least partially coated with a coating deposited from a composition comprising such liquid coating compositions. The compositions can be applied by conventional means including brushing, dipping, flow coating, spraying and the like, but, as indicated earlier, they can, in certain embodiments, be advantageously applied by spraying. The usual spray techniques and equipment for air spraying and electrostatic spraying and either manual or automatic methods can be used.

After application of the liquid coating composition to the substrate, the composition is allowed to coalesce to form a substantially continuous film on the substrate. Typically, the film thickness will be 0.01 to 20 mils (about 0.25 to 508 µm), such as 0.01 to 5 mils (0.25 to 127 µm), or, in some cases, 0.1 to 2 mils (2.54 to 50.8 µm) in thickness. The film is formed on the surface of the substrate by driving diluent, i.e., organic solvent and/or water, out of the film by heating or by an air drying period. In some cases, the heating will only be for a short period of time, sufficient to ensure that any subsequently applied coatings can be applied to the film without dissolving the composition. Suitable drying conditions will depend on the particular composition, but, in general, a drying time of from about 1 to 5 minutes at a temperature of about 68°F to 250°F (20°C to 121°C) will be adequate. More than one coat of the liquid coating composition may be applied to develop the optimum appearance. Between coats, the previously applied coat may be flashed, that is, exposed to ambient conditions for about 1 to 20 minutes.

As indicated earlier, one advantage of certain embodiments of the liquid coating compositions of the present invention is that they can be sprayable, high solids, and they can produce coatings having low gloss.

The liquid compositions of the present invention may be used as a single coating, a clear top coating, a base coating in a two-layered system, or one or more layers of a multi-layered system including a clear top coating composition, colorant layer and base coating composition, or as a primer layer.

In certain embodiments, the liquid coating compositions of the present invention may be used as part of a multi-layer composite coating, such as a "color-plus-clear" coating system, which includes at least one pigmented or colored base coat and at least one clear topcoat. As a result, the present invention is also directed to multi-layer composite coatings, wherein at least one coating layer is deposited from a composition comprising a liquid coating composition of the present invention. In certain embodiments, all of the layers of such a multi-layer composite coating are deposited from a composition comprising a liquid coating composition of the present invention.

For example, in certain embodiments, the clear film-forming composition from which a clear topcoat may be deposited may include the liquid coating composition of the present invention. In such embodiments, the coating composition of the base coat in the color-plus-clear system may comprise any composition useful in coatings applications, such as those typically used in automotive OEM applications, automotive refinish applications, industrial coating applications, architectural coating applications, electrocoating applications, powder coating applications, coil coating applications, and aerospace coating applications, among others. The coating composition of the base coat typically comprises a resinous binder and a pigment to act as the colorant. Particularly useful resinous binders include the afore-mentioned acrylic polymers, polyesters, including alkyds, and polyurethanes, among others.

The base coat compositions may be solvent borne or waterborne. Suitable waterborne base coats in color-plus-clear compositions include those disclosed in United States Patent No. 4,403,003, and the resinous compositions used in preparing these base coats can be used in the practice of the multi-layer composite coatings of the present invention. Also, waterborne polyurethanes such as those prepared in accordance with United States Patent No. 4,147,679 can be used as the resinous binder in the base coat. Further, waterborne coatings such as those described in United States Patent No. 5,071,904 can be used as the base coat.

If desired, the base coat composition may contain additional materials well known in the art of formulated surface coatings, including those discussed above. These materials can constitute up to 40 percent by weight of the total weight of the coating composition.

The base coating compositions can be applied to various substrates to which they adhere by conventional means, but they are most often applied by spraying. The usual spray techniques and equipment for air spraying and electrostatic spraying and either manual or automatic methods can be used.

During application of the base coat composition to the substrate, a film of the base coat is formed on the substrate. Typically, the base coat thickness will be about 0.01 to 5 mils (0.25 to 127 $\mu$m), preferably 0.1 to 2 mils (2.54 to 50.8 $\mu$m) in thickness.

After application of the base coat to the substrate, a film is formed on the surface of the substrate by driving solvent out of the base coat film, by heating or by an air drying period, sufficient to ensure that the clear coat can be applied to the base coat without the former dissolving the base coat composition, yet insufficient to fully cure the base coat. More than one base coat and multiple clear coats may be applied to develop the optimum appearance. Usually between coats, the previously applied coat is flashed.

The clear topcoat composition may be applied to the base coated substrate by any conventional coating technique, such as brushing, spraying, dipping or flowing, but spray applications are preferred because of superior gloss. Any of the known spraying techniques may be employed, such as compressed air spraying, electrostatic spraying, and either manual or automatic methods.

After application of the clear coat composition to the base coat, the coated substrate may be heated to cure the coating layer(s). In the curing operation, solvents are driven off and the film-forming materials in the composition are crosslinked. The heating or curing operation is usually carried out at a temperature in the range of from at least ambient (in the case of free polyisocyanate crosslinking agents) to 350°F (ambient to 177°C) but, if needed, lower or higher temperatures may be used as necessary to activate crosslinking mechanisms.

From the foregoing description, as well as the Examples that follow, it should be apparent that the present invention is also directed to methods for enhancing the flatting capability of at least one flatting agent in a liquid coating composition that comprises at least one film-forming resin and at least one flatting agent. As used herein, the term "enhancing" means to raise, make greater, heighten, or intensify. These methods of the present invention comprise the step of including in the composition at least one compound formed from at least one polyfunctional isocyanurate.

Illustrating the invention are the following examples, which, however, are not to be considered as limiting the invention to their details. Unless otherwise indicated, all parts and percentages in the following examples, as well as throughout the specification, are by weight.

## EXAMPLES

The following Examples A to F describe the preparation of compounds formed from at least one polyfunctional isocyanurate.

## Example A

Table 1 sets forth the components and amounts used to prepare a compound formed from at least one polyfunctional isocyanurate.

Table 1

| Material | Charge (grams) | Equivalents | Percent by Weight |
|---|---|---|---|
| CHARGE 1 | | | |
| Dodecanoic acid[1] | 115.00 | 1.000 | 4.6% |
| Dimethylolpropionic acid[2] | 268.00 | 2.000 | 10.7% |
| TGIC[3] | 738.00 | 6.000 | 29.5% |
| Dimethyl lauryl amine on silica[4] | 1.48 | -- | 0.1% |
| CHARGE 2 | | | |
| Behenic Acid[5] | 341.00 | 1.000 | 13.6% |
| Isostearic Acid[6] | 290.00 | 1.000 | 11.6% |
| Ethylene glycol butyl ether[7] | 150.30 | -- | 6% |
| CHARGE 3 | | | |
| n-butyl acetate[8] | 601.19 | -- | 24% |

[1] Corfree M-2 Dodecanoic acid commercially available from Invista Inc., Wichita, Kansas
[2] Commercially available from Perstorp Polyols, Inc. , Toledo, Ohio
[3] Araldite PT810 commercially available from Vantico Inc. Los Angeles, California
[4] Actiron 32-057 commercially available from Synthron Inc., Morgantown, North Carolina
[5] Hystrene 9022 commercially available from Crompton Corp. Middlebury, Connecticut
[6] Prisorine 3505 isostearic acid commercially available from Unichema Chemie B.V., Netherlands
[7] Commercially available from Dow Chemical Co.
[8] Commercially available from Dow Chemical Co.

Charge I was added to a glass reactor equipped with an agitator, condenser, thermocouple, and nitrogen blanket. Charge I was heated to 100°C over 30 minutes under a nitrogen blanket. After reaching 100°C, the temperature of Charge I was increased by 10°C every 30 minutes to achieve 130°C over a period of 1.5 hours. Samples were taken every 0.5 hours until an acid value of less than 3 was achieved. Then, Charge II (which had been premixed and placed in a 160°F hotroom) was added over 20 minutes. Once all of Charge II was added, the reactor contents were mixed for 1 hour. The reactor contents was sampled until an acid value of less than 3 was measured, at which time the reactor contents were cooled to less than 120°C and thinned to 70% solids by adding Charge III. The product was mixed for 15 minutes and then thinned to 65% solids using a 4:1 solvent blend of n-butyl acetate:ethylene glycol butyl ether. The final product had an acid value of 0.01, an epoxide equivalent weight of 2404, and OH value of 241, a Mw of 3191, and a Mn of 1121. The final product had a dispersive component Hansen solubility parameter, of $\delta_D$ of 10.58, a polar component Hansen solubility parameter, $\delta_P$, of 1.52, a hydrogen bonding component Hansen solubility parameter, $\delta_H$, of 5.87. As a result, the overall Hansen solubility parameter, $\delta$, was 12.13.

**Example B**

Table 2 sets forth the components and amounts used to prepare a compound formed from at least one polyfunctional isocyanurate.

Table 2

| Material | Charge (grams) | Equivalents | Percent by Weight |
|---|---|---|---|
| CHARGE 1 | | | |
| Dodecanoic acid | 57.50 | 0.500 | 6.4% |
| Dimethylolpropionic acid | 134.00 | 1.000 | 14.9% |
| TGIC | 369.00 | 3.000 | 40.9% |
| Dimethyl lauryl amine on silica | 0.74 | -- | 0.1% |

(continued)

| | | | |
|---|---|---|---|
| CHARGE 2 | | | |
| Behenic Acid | 341.00 | 1.000 | 37.8% |

Charge I was added to a glass reactor equipped with an agitator, condenser, thermocouple, and nitrogen blanket. Charge I was heated to 120°C over 2 hours under a nitrogen blanket. After reaching 120°C, the temperature of Charge I was increased to 130°C as needed to get a complete reaction. Once at temperature, the reactor contents were mixed and sampled after 0.5 hours. Once an acid value of less than 3 was achieved, Charge II was added. Once all of Charge II was added, the reactor contents were mixed for 1 hour. The reactor contents was sampled until an acid value of less than 3 was measured, at which time the reactor contents were cooled and placed in a metal can. The final product had an acid value of 0.16, an epoxide equivalent weight of 1564, and OH value of 349, a Mw of 3207, and a Mn of 1407. The final product had a dispersive component Hansen solubility parameter, of $\delta_D$ of 8.65, a polar component Hansen solubility parameter, $\delta_P$, of 4.10, a hydrogen bonding component Hansen solubility parameter, $\delta_H$, of 2.50. As a result, the overall Hansen solubility parameter, $\delta$, was 9.89.

## Example C

Table 3 sets forth the components and amounts used to prepare a compound formed from at least one polyfunctional isocyanurate.

Table 3

| Material | Charge (grams) | Equivalents | Percent by Weight |
|---|---|---|---|
| CHARGE 1 | | | |
| TGIC | 184.50 | 1.500 | 25.2% |
| Dimethyl lauryl amine on silica | 0.37 | -- | 0.1% |
| CHARGE 2 | | | |
| Dodecanoic acid | 28.75 | 0.250 | 3.9% |
| Dimethylolpropionic acid | 67.00 | 0.500 | 9.2% |
| Behenic Acid | 85.25 | 0.250 | 11.7% |
| CHARGE 3 | | | |
| n-butyl acetate | 365.50 | -- | 50.0% |

Charge I was added to a glass reactor equipped with an agitator, condenser, thermocouple, and nitrogen blanket and heated to 120°C under a nitrogen blanket. Charge II was blended in a separate container and then added to Charge I gradually over a period of 2 hours. The reactor contents were sampled until an acid value of less than 3 was measured, at which time the contents were thinned to 50% solids by adding Charge III. The final product had an acid value of 0.03, an epoxide equivalent weight of 2348, and OH value of 124, a Mw of 4164, and a Mn of 2656. The final product had a dispersive component Hansen solubility parameter, of $\delta_D$ of 8.75, a polar component Hansen solubility parameter, $\delta_P$, of 6.00, a hydrogen bonding component Hansen solubility parameter, $\delta_H$, of 3.50. As a result, the overall Hansen solubility parameter, $\delta$, was 11.17.

## Example D

Table 4 sets forth the components and amounts used to prepare a compound formed from at least one polyfunctional isocyanurate.

Table 4

| Material | Charge (grams) | Equivalents | Percent by Weight |
|---|---|---|---|
| CHARGE 1 | | | |
| Dodecanoic acid | 54.54 | 0.474 | 6.2% |
| Dimethylolpropionic acid | 127.10 | 0.949 | 14.5% |
| TGIC | 350.00 | 2.846 | 39.8% |
| Tertiary amine catalyst[9] | 0.07 | -- | 0.0% |
| CHARGE 2 | | | |
| Butyric Acid | 83.57 | 0.949 | 9.5% |
| CHARGE 3 | | | |
| n-butyl acetate | 210.95 | -- | 24.0% |
| Ethylene glycol butyl ether | 52.74 | -- | 6.0% |
| [9] ADMA 12 commercially available from Albermarle Corp., Richmond, Virginia | | | |

Charge I was added to a glass reactor equipped with an agitator, condenser, thermocouple, and nitrogen blanket. Charge I was heated to 100°C over 30 minutes under a nitrogen blanket. After reaching 100°C, the temperature of Charge I was increased by 10°C every 30 minutes to achieve 130°C over a period of 1.5 hours. Samples were taken every 0.5 hours until an acid value of less than 3 was achieved. Then, Charge II (which had been premixed and placed in a 71°C (160°F) hotroom) was added over 20 minutes. Once all of Charge II was added, the reactor contents was mixed for 1 hour. The reactor contents were sampled until an acid value of less than 3 was measured, at which time the reactor contents were cooled to less than 120°C and thinned to 70% solids by adding Charge III. The product was mixed for 15 minutes and placed in a metal can. The final product had a dispersive component Hansen solubility parameter, of $\delta_D$ of 9.61, a polar component Hansen solubility parameter, $\delta_P$, of 6.81, a hydrogen bonding component Hansen solubility parameter, $\delta_H$, of 6.79. As a result, the overall Hansen solubility parameter, $\delta$, was 12.06.

**Example E**

Table 5 sets forth the components and amounts used to prepare a compound formed from at least one polyfunctional isocyanurate.

Table 5

| Material | Charge (grams) | Equivalents | Percent by Weight |
|---|---|---|---|
| CHARGE 1 | | | |
| TGIC | 400.00 | 3.252 | 27.8% |
| Dimethyl lauryl amine on silica | 0.80 | -- | 0.1% |
| CHARGE 2 | | | |
| N-butyl acetate | 719.78 | -- | 50.0% |
| CHARGE 3 | | | |
| Dodecanoic acid | 62.33 | 0.542 | 4.3% |
| Dimethylolpropionic acid | 72.63 | 1.000 | 5.0% |
| Behenic Acid | 184.82 | 1.000 | 12.8% |

Charges I and II were added to a glass reactor equipped with an agitator, condenser, thermocouple, and nitrogen blanket and heated to 120°C under a nitrogen blanket. Charge III was blended in a separate container and then added to Charges I and II gradually over a period of 2 hours. The reactor contents were held at temperature and sampled until an acid value of less than 3 was measured. The final product had an epoxide equivalent weight of 886, and a OH value of 106. The final product had a dispersive component Hansen solubility parameter, of $\delta_D$ of 8.75, a polar component

Hansen solubility parameter, $\delta_P$, of 6.00, a hydrogen bonding component Hansen solubility parameter, $\delta_H$, of 3.50. As a result, the overall Hansen solubility parameter, $\delta$, was 11.17.

## Example F

Table 6 sets forth the components and amounts used to prepare a compound formed from at least one polyfunctional isocyanurate.

Table 6

| Material | Charge (grams) | Equivalents | Percent by Weight |
|---|---|---|---|
| CHARGE 1 | | | |
| Behenic acid | 682.0 | 2.00 | 42.9% |
| THEIC[10] | 522.6 | 6.00 | 32.9% |
| Dimethylolpropionic acid | 268.0 | 2.00 | 16.8% |
| Dodecanoic acid | 115.0 | 1.00 | 7.2% |
| Triisodecyl phosphite[11] | 1.6 | -- | 0.0% |
| Dibutyl tin oxide[12] | 1.6 | -- | 0.0% |
| [10] Commercially available from Nissan Chemical America Corp., Houston, Texas [11] Weston TDP commercially available from Crompton Corp., Middlebury, Connecticut [12] Fascat 4201 commercially available from Atofina Chemicals Inc., Philadelphia, Pennsylvania | | | |

Charge I was added to a glass reactor equipped with an agitator, condenser, thermocouple, and nitrogen blanket in the order listed in Table 6. Charge I was heated under a nitrogen blanket slowly to 230°C to avoid scorching. Samples were taken 4 hours after reaching 230°C to check the acid value. Samples were then taken periodically until an acid value of less than 3 was measured, at which time the reactor contents were cooled to a safe temperature.

Coating Examples

The following Examples 1 to 5 describe the preparation of liquid coating compositions in accordance with certain embodiments of the present invention. Comparative Examples 1C to 6C describe the preparation of comparative coating compositions. The Comparative Examples 1C to 4C are similar to their corresponding Examples 1 to 4 except that they do not include at least one flatting agent. Comparative Example 5C describes the preparation of a composition similar to Examples 1 to 4 except that it does not include within the composition at least one compound formed from at least one polyfunctional isocyanurate. Comparative Example 6C describes the preparation of a composition similar to Examples 1 to 4 except that it does not include at least one flatting agent or at least one compound formed from at least one polyfunctional isocyanurate.

Examples 1 to 4

Coating compositions of Examples 1 to 4 were made using the components and amounts (in grams) shown in Tables 7 and 8. Premix 1 (Table 7) was prepared using a suitable mixing container equipped with a Cowles dispersing agitator. Components 1a, 1b, and 1c were added to the container. Component 1d was then added under Cowles blade agitation. Components 1e, 1f, and 1g, were then added in order under Cowles blade agitation. The container contents were then allowed to mix for 10 to 15 minutes under highspeed agitation. Next, components 1h, 1i, and 1j were added in order. Component 1k was then added and the container contents were then mixed slowly for 5 to 10 minutes. Premix 1 was then mixed with component 1. Once mixed components 3 and 4 were added and then mixed. Component 5 was added upon application of the composition to a substrate.

Table 7 - Premix 1

| Component | Name | Example 1 | Example 2 | Example 3 | Example 4 |
|---|---|---|---|---|---|
| 1a | 13 Tone Polyol 0201[13] | 28.35 | 28.35 | 28.35 | 28.35 |
| 1b | N-Butyl Acetate[14] | 37.98 | 37.98 | 37.98 | 37.93 |
| 1c | Acrylic Resin[15] | 28.35 | 28.35 | 28.35 | 28.35 |
| 1d | Example A Compound | -- | -- | -- | 13.26 |
| | Example B Compound | 18.75 | -- | -- | -- |
| | Example C Compound | -- | 18.52 | -- | -- |
| | Example D Compound | -- | -- | 18.75 | -- |
| 1e | Disperbyk-110[16] | 7.00 | 7.00 | 7.00 | 7.00 |
| 1f | Syloid 221 Silica[17] | 30.69 | 30.69 | 30.69 | 32.92 |
| 1g | Nicron 503 Talc[18] | 20.93 | 20.93 | 20.93 | 20.93 |
| 1h | Propanone-2[19] | 32.92 | 32.92 | 32.92 | 32.92 |
| 1i | Tinuvin 328[20] | 6.16 | 6.16 | 6.16 | 6.16 |
| 1j | Tinuvin 123[21] | 3.08 | 3.08 | 3.08 | 3.08 |
| 1k | Dibutyl Tin di-laurate[22] | 0.84 | 0.84 | 0.84 | 0.84 |

[13] Low molecular weight, linear polycaprolactone polyol commercially available from Dow Chemical Co.
[14] Solvent commercially available from BASF Corp.
[15] Solution of 84 weight percent acrylic resin (21% hydroxyethyl acrylate, 2% n-butyl methacrylate, and
77% n-butyl acrylate) in 16 weight percent solvent (24% mineral spirits and 76% oxo-hexyl acetate).
[16] Wetting agent commercially available from BYK Chemie
[17] Flatting silica commercially available from Grace Davison
[18] Microcrystalline talc commercially available from Luzenac America, Inc.
[19] Solvent commercially available from Hoechst Celanese Chem. Co.
[20] UV absorber commercially available from Ciba Specialty Chemicals
[21] Hindered Amine Light Stabilizers commercially available from Ciba Specialty Chemicals.
[22] Commercially available from Air Products & Chemicals Inc.

Table 8

| Component | Name | Example 1 | Example 2 | Example 3 | Example 4 |
|---|---|---|---|---|---|
| 1 | F3547 Black Toner[23] | 49.83 | 49.83 | 49.83 | 41.78 |
| 2 | Premix 1 | 99.65 | 99.65 | 99.65 | 83.56 |
| 3 | F3330 Solvent Blend[24] | 19.01 | 18.00 | 21.60 | 17.01 |
| 4 | DX84 Accelerato[25] | 7.11 | 7.11 | 7.11 | 5.96 |
| 5 | F3260 Curing Agent[26] | 34.41 | 32.35 | 38.49 | 26.69 |

[23] Commercially available from PPG Industries, Inc.
[24] Commercially available from PPG Industries, Inc.
[25] Commercially available from PPG Industries, Inc.
[26] Commercially available from PPG Industries, Inc.

Comparative Examples 1 C to 6C

Coating compositions of Comparative Examples 1C to 6C were made using the components and amounts (in grams) shown in Tables 9 (Premix 1) and 10. The coating compositions were made in the same manner as described above for Examples 1 to 4.

Table 9 - Premix 1

| Component | Name | Comparative Example 1C | Comparative Example 2C | Comparative Example 3C | Comparative Example 4C | Comparative Example 5C | Comparative Example 6C |
|---|---|---|---|---|---|---|---|
| 1a | Tone Polyol 0201 | 28.35 | 28.35 | 28.35 | 28.35 | 32.84 | 27.78 |
| 1b | N-Butyl Acetate | 37.98 | 37.98 | 37.98 | 37.93 | 37.93 | 37.93 |
| 1c | Acrylic Resin[20] | 28.35 | 28.35 | 28.35 | 28.35 | 33.47 | 39.57 |
| 1d | Example A Compound | - | - | - | 13.26 | - | - |
| | Example 8 Compound | 18.75 | - | - | - | - | - |
| | Example C Compound | - | 18.52 | - | - | - | - |
| | Example D Compound | - | - | 18.75 | - | - | - |
| 1e | Disperbyk-110 | 7.00 | 7.00 | 7.00 | 7.00 | 7.00 | 7.00 |
| 1f | Syloid 221 Silica | - | - | - | - | 32.92 | - |
| 1g | Nicron 503 Talc | 20.93 | 20.93 | 20.93 | 20.93 | 20.93 | 20.93 |
| 1h | Propanone-2 | 32.92 | 32.92 | 32.92 | 32.92 | 32.92 | 32.92 |
| 1i | Tinuvin 328 | 6.16 | 6.16 | 6.16 | 6.16 | 6.16 | 6.16 |
| 1j | Tinuvin 123 | 3.08 | 3.08 | 3.08 | 3.08 | 3.08 | 3.08 |
| 1k | Dibutyl Tin di-laurate | 0.84 | 0.84 | 0.84 | 0.84 | 0.84 | 0.84 |
| [26] The same as described in Table 7, above. | | | | | | | |

Table 10

| Component | Name | Comparative Example 1C | Comparative Example 2C | Comparative Example 3C | Comparative Example 4C | Comparative Example 5C | Comparative Example 6C |
|---|---|---|---|---|---|---|---|
| 1 | F3547 Black Toner | 49.83 | 49.83 | 49.83 | 42.06 | 41.62 | 42.48 |
| 2 | Premix 1 | 99.65 | 99.65 | 99.65 | 84.12 | 83.24 | 84.96 |
| 3 | F3330 Solvent Blend | 14.20 | 12.60 | 17.00 | 12.58 | 18.12 | 12.93 |
| 4 | DX84 Accelerator | 7.11 | 7.11 | 7.11 | 6.00 | 5.94 | 6.06 |
| 5 | F3260 Curing Agent | 38.65 | 36.30 | 43.45 | 30.23 | 26.08 | 28.57 |

Example 5

The coating composition of Example 5 was made using the components and amounts (in grams) shown in Tables 11 (Premix 1) and 12. The coating compositions were made in the same manner as described above for Examples 1 to 4.

Table 11 - Premix 1

| Component | Name | Example 5 |
|---|---|---|
| 1a | Polyester Resin[27] | 17.56 |
| 1b | N-Butyl Acetate | 1.53 |
| 1c | Zeeospheres Ceramic Microspheres W-410[28] | 50.10 |
| 1d | Example E Compound | 48.00 |
| 1e | Propoxylated Trimethylolpropane[29] | 26.36 |
| 1f | N-Butyl Acetate | 45.32 |
| 1g | Substituted Benzotriazole $(C_{22}H_{29}N_3O)$[30] | 2.37 |
| 1h | Tinuvin 292[31] | 1.22 |
| 1i | Dibutyl Tin di-laurate | 0.10 |
| 1j | ACEMATT OK 412[32] | 27.98 |
| 1k | Propoxylated Trimethylolpropane[29] | 5.40 |
| 1l | N-Butyl Acetate | 4.07 |

[27] Solution of 70 weight percent polyester resin composition (47.98% Cardura E-10, commercially available from Resolution Performance Products, 38.64% phthalic anhydride, 10.60% trimethylol propane, 0.72% propylene imine, 0.38% tetraethylenepentamine, and 1.68% Desmodur®N-3390, commercially available from Bayer Corp.) and 30 weight percent solvent (20.6% aromatic solvent-100 type, 79% methyl ether propylene glycol acetate, and 0.4% Desmodur®N-3390).
[28] Silica-Alumina ceramic commercially available from 3M Corp.
[29] Commercially available from Perstorp Polyols, Inc.
[30] Commercially available from Chitec Chemical Co.
[31] Hindered amine light-stabilizer commercially available from Ciba Specialty Chemicals, Inc.
[32] Wax coated silicon dioxide commercially available from DeGussa, Inc.

Table 12

| Component | Name | Example 5 |
|---|---|---|
| 1 | F3547 Black Toner | 73.91 |
| 2 | Premix 1 | 73.91 |
| 3 | F3330 Solvent Blend | 18.14 |
| 4 | DX84 Accelerator | 6.58 |
| 5 | F3260 Curing Agent | 47.46 |

Test Substrates

Each coating composition was applied over a bare steel Q-Panel®, using a DeVilbiss high volume - low pressure (HVLP) spray gun with a 1.4 spray tip with 241 kPa (35 psi) pressure at the gun. Two passes of the gun were made over each panel with a 10 minute flash period between passes to allow for evaporation of solvent. The coating compositions were allowed to cure at room temperature for at least 24 hours before measuring gloss values. Results are reported in Table 13.

Table 13

| Coating | 60° Gloss[32] | 85° Gloss[33] |
|---|---|---|
| Example 1 | 7.7 | 20.4 |
| Example 2 | 58.4 | 78.6 |
| Example 3 | 27.7 | 37.7 |
| Example 4 | 16.0 | 44.0 |
| Example 5 | 3.4 | 27.8 |
| Comparative Example 1 | 60.9 | 62.5 |
| Comparative Example 2 | 61.9 | 64.9 |
| Comparative Example 3 | 88.1 | 88.9 |
| Comparative Example 4 | 90.6 | 94.6 |
| Comparative Example 5 | 65.8 | 88.9 |
| Comparative Example 6 | 89 | 98 |
| [32] 60° Gloss was measured using a BYK/Haze Gloss meter available from Gardner Instrument Company, Inc determined at a 60° viewing angle. [33] 85° Gloss was measured using a BYK/Haze Gloss meter available from Gardner Instrument Company, Inc determined at a 85° viewing angle. | | |

**Claims**

1. A liquid coating composition comprising:

   (a) at least one film-forming resin,
   (b) at least one flatting agent, and
   (c) at least one compound formed from at least one polyfunctional isocyanurate,

   wherein the at least one compound formed from at least one polyfunctional isocyanurate is present in the composition in an amount sufficient to result in a coating having a 60° gloss that is at least 10% lower compared to a coating deposited at similar conditions from a similar liquid coating composition that does not include the at least one compound formed from at least one polyfunctional isocyanurate,
   wherein the at least one compound formed from at least one polyfunctional isocyanurate comprises the reaction product of reactants comprising: (i) at least one polyfunctional isocyanurate, and (ii) at least one long chain monofunctional reactant having a reactive group reactive with the reactive groups of the at least one polyfunctional isocyanurate, and
   wherein the at least one compound formed from at least one polyfunctional isocyanurate is present in the liquid coating composition is an amount of 1 up to 50 weight percent, with weight percent being based on the total weight of resins solids in the composition.

2. The liquid coating composition of claim 1, wherein the at least one film-forming resin comprises at least one thermosetting film-forming resin.

3. The liquid coating composition of claim 1, wherein the liquid coating composition is a sprayable, high solids composition that is capable of producing a low gloss coating.

4. The liquid coating composition of claim 3, wherein the liquid coating composition comprises at least 50 weight percent total solids, based on the total weight of the liquid coating composition.

5. The liquid coating composition of claim 1, wherein the at least one film-forming resin comprises at least one thermosetting film-forming resin formed from the reaction of at least one polymer having at least one type of reactive group and at least one curing agent having reactive groups reactive with the at least one type of reactive group of the at least one polymer.

6. The liquid coating composition of claim 1, wherein the at least one flatting agent comprises amorphous or pyrogenic silica, silica gels, alumina, titania, zirconia, zircon, tin oxide, magnesia, or a mixture thereof.

7. The liquid coating composition of claim 6, wherein the at least one flatting agent comprises silica.

8. The liquid coating composition of claim 6, wherein the at least one flatting agent comprises a synthetic amorphous silica gel.

9. The liquid coating composition of claim 1, wherein the at least one flatting agent comprises polypropylene, polyethylene, polytetrafluoroethylene, Al, Zn, Ca or Mg stearate, a micronised polypropylene wax, a urea-formaldehyde condensate, or a mixture thereof.

10. The liquid coating composition of claim 1, wherein the at least one polyfunctional isocyanurate comprises tris(hydroxyethyl) isocyanurate, triglycidyl isocyanurate, triallyl isocyanurate, the isocyanurate trimer of hexamethylene diisocyanate, or a mixture thereof.

11. The liquid coating composition of claim 1, wherein the at least one long chain monofunctional reactant comprises at least 18 carbon atoms.

12. The liquid coating composition of claim 1, wherein the at least one compound formed from at least one polyfunctional isocyanurate comprises the reaction product of reactants further comprising: (iii) at least one polyfunctional reactant having at least two reactive groups reactive with the reactive groups of the at least one polyfunctional isocyanurate.

13. The liquid coating composition of claim 5, wherein the at least one compound formed from at least one polyfunctional isocyanurate comprises the reaction product of reactants comprising: (i) at least one polyfunctional isocyanurate, (ii) at least one long chain monofunctional reactant having a reactive group reactive with the reactive groups of the at least one polyfunctional isocyanurate (iii) at least one polyfunctional reactant having at least two reactive groups reactive with the reactive groups of the at least one polyfunctional isocyanurate, and (iv) at least one reactant comprising at least one reactive group reactive with the reactive groups of the at least one polyfunctional isocyanurate and at least one reactive group reactive with the reactive groups of the at least one curing agent.

14. The liquid coating composition of claim 1, wherein the at least one compound formed from a polyfunctional isocyanurate comprises a polymer having a Mw of from 1,500 to 10,000.

15. The liquid coating composition of claim 1, wherein the at least one compound formed from a polyfunctional isocyanurate comprises a polymer having a Mw/Mn of from 1.5 to 3.0.

16. The liquid coating composition of claim 1, wherein the at least one polyfunctional isocyanurate comprises three epoxide groups.

17. A substrate at least partially coated with a coating deposited from a composition comprising the liquid coating composition of claim 1.

18. A multi-layer composite coating wherein at least one layer of the multi-layer composite coating is deposited from a composition comprising the liquid coating composition of claim 1.

19. A method of coating a substrate comprising:

(a) applying a composition comprising the liquid coating composition of claim 1 to at least a portion of the substrate,
(b) coalescing the liquid coating composition over the substrate in the form of a substantially continuous film, and
(c) curing the liquid coating composition.

20. The use of at least one compound formed from at least one polyfunctional isocyanurate according to claim 1 for enhancing the flatting capability of at least one flatting agent in a liquid coating composition comprising at least one film-forming resin and at least one flatting agent.

**Patentansprüche**

1. Flüssige Beschichtungszusammensetzung, enthaltend:

   (a) wenigstens ein filmbildendes Harz,
   (b) wenigstens ein Mattierungsmittel und
   (c) wenigstens eine Verbindung, die aus wenigstens einem polyfunktionellen Isocyanurat gebildet ist,

   wobei die wenigstens eine Verbindung, die aus wenigstens einem polyfunktionalen Isocyanurat gebildet ist, in der Zusammensetzung in einer Menge vorhanden ist, die ausreicht, um zu einer Beschichtung zu führen, die einen 60°-Glanz aufweist, der wenigstens 10% niedriger ist verglichen mit einer Beschichtung, die unter ähnlichen Bedingungen aus einer ähnlichen flüssigen Beschichtungszusammensetzung aufgebracht ist, die nicht die wenigstens eine Verbindung enthält, die aus wenigstens einem polyfunktionalen Isocyanurat gebildet ist,
   wobei die wenigstens eine Verbindung, die aus wenigstens einem polyfunktionalen Isocyanurat gebildet ist, das Reaktionsprodukt von Reaktanten umfassend: (i) wenigstens ein polyfunktionales Isocyanurat und (ii) wenigstens einen langkettigen monofunktionellen Reaktanten mit einer reaktiven Gruppe, die mit den reaktiven Gruppen des wenigstens einen polyfunktionalen Isocyanurats reaktiv ist, enthält und
   wobei die wenigstens eine Verbindung, die aus wenigstens einem polyfunktionalen Isocyanurat gebildet ist, in der flüssigen Beschichtungszusammensetzung in einer Menge von 1 bis zu 50 Gewichtsprozent vorhanden ist, wobei die Gewichtsprozentangaben sich auf das Gesamtgewicht der Harzfeststoffe in der Zusammensetzung beziehen.

2. Flüssige Beschichtungszusammensetzung nach Anspruch 1, wobei das wenigstens eine filmbildende Harz wenigstens ein wärmehärtendes filmbildendes Harz umfasst.

3. Flüssige Beschichtungszusammensetzung nach Anspruch 1, wobei die flüssige Beschichtungszusammensetzung eine sprühbare Zusammensetzung mit hohem Feststoffgehalt ist, die in der Lage ist, eine Beschichtung mit niedrigem Glanz zu erzeugen.

4. Flüssige Beschichtungszusammensetzung nach Anspruch 3, wobei die flüssige Beschichtungszusammensetzung wenigstens 50 Gewichtsprozent Gesamtfeststoff, bezogen auf das Gesamtgewicht der flüssigen Beschichtungszusammensetzung, enthält.

5. Flüssige Beschichtungszusammensetzung nach Anspruch 1, wobei das wenigstens eine filmbildende Harz wenigstens ein wärmehärtendes filmbildendes Harz umfasst, das durch die Reaktion wenigstens eines Polymers, das wenigstens eine Art reaktiver Gruppe enthält, und wenigstens eines Härtungsmittels mit reaktiven Gruppen, die mit der wenigstens einen Art reaktiver Gruppe des wenigstens einen Polymers reaktiv sind, gebildet wird.

6. Flüssige Beschichtungszusammensetzung nach Anspruch 1, wobei das wenigstens eine Mattierungsmittel amorphe oder pyrogene Kieselsäure, Silicagele, Aluminiumoxid, Titandioxid, Zirconiumdioxid, Zirkon, Zinnoxid, Magnesiumoxid oder eine Mischung davon umfasst.

7. Flüssige Beschichtungszusammensetzung nach Anspruch 6, wobei das wenigstens eine Mattierungsmittel Kieselsäure umfasst.

8. Flüssige Beschichtungszusammensetzung nach Anspruch 6, wobei das wenigstens eine Mattierungsmittel ein synthetisches amphores Silicagel umfasst.

9. Flüssige Beschichtungszusammensetzung nach Anspruch 1, wobei das wenigstens eine Mattierungsmittel Polypropylen, Polyethylen, Polytetrafluorethylen, Al-, Zn-, Ca- oder Mg-Stearat ein mikronisiertes Polypropylenwachs, ein Harnstoff-Formaldehyd-Kondensat oder eine Mischung davon umfasst.

10. Flüssige Beschichtungszusammensetzung nach Anspruch 1, wobei das wenigstens eine polyfunktionale Isocyanurat Tris(hydroxyethyl)isocyanurat, Triglycidylisocyanurat, Triallylisocyanurat, das Isocyanurattrimer von Hexamethylendiisocyanat oder eine Mischung davon umfasst.

**11.** Flüssige Beschichtungszusammensetzung nach Anspruch 1, wobei der wenigstens eine langkettige monofunktionale Reaktant wenigstens 18 Kohlenstoffatome enthält.

**12.** Flüssige Beschichtungszusammensetzung nach Anspruch 1, wobei die wenigstens eine Verbindung, die aus wenigstens einem polyfunktionalen Isocyanurat gebildet ist, das Reaktionsprodukt von Reaktanten enthält, die weiterhin umfassen: (iii) wenigstens einen polyfunktionellen Reaktanten mit wenigstens zwei reaktiven Gruppen, die mit den reaktiven Gruppen des wenigstens einen polyfunktionalen Isocyanurats reaktiv sind.

**13.** Flüssige Beschichtungszusammensetzung nach Anspruch 5, wobei die wenigstens eine Verbindung, die aus wenigstens einem polyfunktionalen Isocyanurat gebildet ist, das Reaktionsprodukt von Reaktanten, umfassend: (i) wenigstens ein polyfunktionales Isocyanurat, (ii) wenigstens einen langkettigen monofunktionalen Reaktanten mit einer reaktiven Gruppe, die mit den reaktiven Gruppen des wenigstens einen polyfunktionalen Isocyanurats reaktiv ist, (iii) wenigstens einen polyfunktionalen Reaktanten mit wenigstens zwei reaktiven Gruppen, die mit den reaktiven Gruppen des wenigstens einen polyfunktionalen Isocyanurats reaktiv sind, und (iv) wenigstens einen Reaktanten mit wenigstens einer reaktiven Gruppe, die mit den reaktiven Gruppen des wenigstens einen polyfunktionalen Isocyanurats reaktiv ist, und wenigstens einer reaktiven Gruppe, die mit den reaktiven Gruppen des wenigstens einen Härtungsmittels reaktiv ist, enthält.

**14.** Flüssige Beschichtungszusammensetzung nach Anspruch 1, wobei die wenigstens eine Verbindung, die aus wenigstens einem polyfunktionalen Isocyanurat gebildet ist, ein Polymer mit einem Mw von 1.500 bis 10.000 umfasst.

**15.** Flüssige Beschichtungszusammensetzung nach Anspruch 1, wobei die wenigstens eine Verbindung, die aus wenigstens einem polyfunktionalen Isocyanurat gebildet ist, ein Polymer mit einem Mw/Mn von 1,5 bis 3,0 umfasst.

**16.** Flüssige Beschichtungszusammensetzung nach Anspruch 1, wobei das wenigstens eine polyfunktionale Isocyanurat drei Epoxidgruppen enthält.

**17.** Substrat, das zumindest teilweise mit einer Beschichtung beschichtet ist, die aus einer Zusammensetzung aufgebracht ist, die die flüssige Beschichtungszusammensetzung nach Anspruch 1 enthält.

**18.** Mehrschichtige Verbundbeschichtung, wobei wenigstens eine Schicht der mehrschichtigen Verbundbeschichtung aus einer Zusammensetzung aufgebracht ist, die die flüssige Beschichtungszusammensetzung nach Anspruch 1 enthält.

**19.** Verfahren zur Beschichtung eines Substrats, umfassend:

(a) Aufbringen einer Zusammensetzung, die die flüssige Beschichtungszusammensetzung nach Anspruch 1 enthält, auf wenigstens einen Teil des Substrats,
(b) Koaleszieren der flüssigen Beschichtungszusammensetzung auf dem Substrat in Form eines im Wesentlichen kontinuierlichen Films und
(c) Härten der flüssigen Beschichtungszusammensetzung.

**20.** Verwendung wenigstens einer Verbindung, die aus wenigstens einem polyfunktionalen Isocyanurat gemäß Anspruch 1 gebildet ist, um die Mattierungsfähigkeit wenigstens eines Mattierungsmittels in einer flüssigen Beschichtungszusammensetzung, die wenigstens ein filmbildendes Harz und wenigstens ein Mattierungsmittel enthält, zu verstärken.

**Revendications**

**1.** Composition de revêtement liquide comprenant :

(a) au moins une résine filmogène,
(b) au moins un agent de matité, et
(c) au moins un composé formé à partir d'au moins un isocyanurate polyfonctionnel,

dans laquelle le au moins un composé formé à partir d'au moins un isocyanurate polyfonctionnel est présent dans la composition en quantité suffisante pour fournir un revêtement présentant une brillance à 60° au moins 10 % inférieure en comparaison d'un revêtement appliqué dans des conditions similaires à partir d'une composition de revêtement liquide similaire qui ne comprend pas le au moins un composé formé à partir d'au moins un isocyanurate polyfonctionnel,

dans laquelle le au moins un composé formé à partir d'au moins un isocyanurate polyfonctionnel comprend le produit réactionnel à base de réactants comprenant : (i) au moins un isocyanurate polyfonctionnel, et (ii) au moins un réactant monofonctionnel à chaîne longue présentant un groupement réactif réagissant avec les groupements réactifs du au moins un isocyanurate polyfonctionnel, et

dans laquelle le au moins composé formé à partir d'au moins un isocyanurate polyfonctionnel est présent dans la composition de revêtement liquide en quantité de 1 à 50 pour cent en poids, le pourcentage en poids étant basé sur le poids total des résines solides dans la composition.

2. Composition de revêtement liquide selon la revendication 1, dans laquelle la au moins une résine filmogène comprend au moins une résine filmogène thermodurcissable.

3. Composition de revêtement liquide selon la revendication 1, dans laquelle la composition de revêtement liquide est une composition pulvérisable à teneur élevée en solides, qui est capable de produire un revêtement ayant une faible brillance.

4. Composition de revêtement liquide selon la revendication 3, laquelle composition de revêtement liquide comprend au moins 50 pour cent en poids de solides totaux sur la base du poids total de la composition de revêtement liquide.

5. Composition de revêtement liquide selon la revendication 1, dans laquelle la au moins une résine filmogène comprend au moins une résine filmogène thermodurcissable formée à partir de la réaction entre au moins un polymère présentant au moins un type de groupement réactif et au moins un agent durcissant présentant des groupements réactifs réagissant avec le au moins un type de groupement réactif du au moins un polymère.

6. Composition de revêtement liquide selon la revendication 1, dans laquelle le au moins un agent de matité comprend la silice amorphe ou la silice pyrogène, des gels de silice, l'alumine, l'oxyde de titane, la zircone, l'oxyde d'étain, la magnésie ou l'un de leurs mélanges.

7. Composition de revêtement liquide selon la revendication 6, dans laquelle le au moins un agent de matité comprend la silice.

8. Composition de revêtement liquide selon la revendication 6, dans laquelle le au moins un agent de matité comprend un gel de silice amorphe synthétique.

9. Composition de revêtement liquide selon la revendication 1, dans laquelle le au moins un agent de matité comprend le polypropylène, le polyéthylène, le polytétrafluoroéthylène, le stéarate d'Al, de Zn, de Ca ou de Mg, une cire de polypropylène micronisée, un condensat d'urée-formaldéhyde ou l'un de leurs mélanges.

10. Composition de revêtement liquide selon la revendication 1, dans laquelle le au moins un isocyanurate polyfonctionnel comprend l'isocyanurate de tris(hydroxyéthyle), l'isocyanurate de triglycidyle, l'isocyanurate de triallyle, l'isocyanurate trimère de diisocyanate d'hexaméthylène ou l'un de leurs mélanges.

11. Composition de revêtement liquide selon la revendication 1, dans laquelle le au moins un réactant monofonctionnel à chaîne longue comprend au moins 18 atomes de carbone.

12. Composition de revêtement liquide selon la revendication 1, dans laquelle le au moins un composé formé à partir d'au moins un isocyanurate polyfonctionnel comprend le produit réactionnel des réactants comprenant également : (iii) au moins un réactant polyfonctionnel présentant au moins deux groupements réactifs réagissant avec les groupements réactifs du au moins un isocyanurate polyfonctionnel.

13. Composition de revêtement liquide selon la revendication 5, dans laquelle le au moins un composé formé à partir d'au moins un isocyanurate polyfonctionnel comprend le produit réactionnel des réactants comprenant : (i) au moins un isocyanurate polyfonctionnel, (ii) au moins un réactant monofonctionnel à chaîne longue présentant un groupement réactif réagissant avec les groupements réactifs du au moins un isocyanurate polyfonctionnel, (iii) au moins un réactant polyfonctionnel présentant au moins deux groupements réactifs réagissant avec les groupements réactifs du au moins un isocyanurate polyfonctionnel, et (iv) au moins un réactant comprenant au moins un groupement réactif réagissant avec les groupements réactifs du au moins un isocyanurate polyfonctionnel et au moins un groupement réactif réagissant avec les groupements réactifs du au moins un agent durcissant.

14. Composition de revêtement liquide selon la revendication 1, dans laquelle le au moins un composé formé à partir d'un isocyanurate polyfonctionnel comprend un polymère présentant un Mw (poids moléculaire en masse) de 1 500 à 10 000.

15. Composition de revêtement liquide selon la revendication 1, dans laquelle le au moins un composé formé à partir d'un isocyanurate polyfonctionnel comprend un polymère présentant un rapport Mw/Mn (poids moléculaire en masse/ poids moléculaire en nombre) de 1,5 à 3,0.

16. Composition de revêtement liquide selon la revendication 1, dans laquelle le au moins un isocyanurate polyfonctionnel comprend trois groupements époxyde.

17. Substrat au moins partiellement recouvert d'un revêtement appliqué à partir d'une composition comprenant la composition de revêtement liquide selon la revendication 1.

18. Revêtement composite multicouche, dans lequel au moins une couche du revêtement composite multicouche est appliquée à partir d'une composition comprenant la composition de revêtement liquide selon la revendication 1.

19. Procédé de revêtement d'un substrat comprenant :

   (a) l'application de la composition comprenant la composition de revêtement liquide selon la revendication 1 sur au moins une partie du substrat,
   (b) déclencher la coalescence de la composition de revêtement liquide sur le substrat sous la forme d'un film sensiblement continu, et
   (c) durcir la composition de revêtement liquide.

20. Utilisation d'au moins un composé formé à partir d'au moins un isocyanurate polyfonctionnel selon la revendication 1, pour renforcer la capacité de matir d'au moins un agent de matité dans une composition de revêtement liquide comprenant au moins une résine filmogène et au moins un agent de matité.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 835914 A
- US 4046729 A
- US 3799854 A
- US 3919351 A
- US 4546045 A
- US 5468802 A
- US 4798746 A
- US 4732790 A
- US 4681811 A
- US 3919315 A
- US 4220679 A
- US 4403003 A
- US 4147769 A
- US 5071904 A
- US 4147679 A

**Non-patent literature cited in the description**

- **Hawley, Gessner G.** The Condensed Chemical Dictionary. Oil and Colour Chemists' Association, 1974, vol. 2, 856
- **Saunders, K.J.** Organic Polymer Chemistry. Chapman and Hall, 1973, 41-42
- **Hansen.** ENCYCLOPEDIA OF CHEMICAL TECHNOLOGY. John Wiley & Sons, Inc, 1971, 889-909
- **Hansen ; Charles M. Hansen.** Solubility Parameter: A User's Handbook. CRC Press LLC, 2000